# EUROPÄISCHE PATENTSCHRIFT

(11) **EP 3 084 366 B1**
(45) Veröffentlichungstag und Bekanntmachung des Hinweises auf die Patenterteilung: **16.09.2020**
(21) Anmeldenummer: 14802377.3
(22) Anmeldetag: 17.11.2014
(51) Int. Cl.: G01F 1/84, B21D 39/04

(54) **METALLROHR-METALLHÜLSE-METALLKÖRPER-VERBUNDSYSTEMS EINES MESSWANDLERS VOM VIBRATIONSTYP, HERSTELLUNG EINES SOLCHEN VERBUNDSYSTEMS, MESSAUFNEHMER VOM VIBRATIONSTYP UND VIBRONISCHES MESSGERÄT**
INTERCONNECTION OF A METAL TUBE, A METAL SLEEVE AND A METAL BODY OF A VIBRATION TYPE TRANSMITTER, PRODUCTION OF SUCH AN INTERCONNECTION, VIBRATION TYPE SENSOR AND VIBRONIC MEASURING DEVICE
INTERCONNEXION D'UN TUBE MÉTALLIQUE, D'UNE MANCHON MÉTALLIQUE ET D'UN CORPS MÉTALLIQUE D'UN ÉMETTEUR DE TYPE VIBRATION, PRODUCTION D'UNE TELLE INTERCONNEXION, CAPTEUR DE TYPE VIBRATION ET DISPOSITIF DE MESURE VIBRONIQUE

(30) Priorität: 20.12.2013 DE 102013114742
(43) Veröffentlichungstag der Anmeldung: 26.10.2016
(73) Patentinhaber: Endress+Hauser Flowtec AG, 4153 Reinach (BL) (CH)
(72) Erfinder: SCHÜTZE, Christian, CH-4055 Basel (CH); BRAUN, Marcel, 79594 Inzlingen (DE); BUTZBACH, Dirk, F-68330 Huningue (FR); LORENZ, Rainer, 79540 Lörrach (DE)
(74) Vertreter: Andres, Angelika Maria
(86) Internationale Anmeldenummer: PCT/EP2014/074711
(87) Internationale Veröffentlichungsnummer: WO 2015/090775

(56) Entgegenhaltungen:
- EP-A2- 1 074 821
- WO-A1-02/25224
- DE-A1- 3 724 675
- US-A- 4 627 146
- US-A1- 2008 124 186
- Gohl: "Nennweite von Rohren", , 30 September 2009 (2009-09-30), XP055648537, Retrieved from the Internet: URL:http://www.gohl.de/fileadmin/VORLAGEN/ basisdokumente/de/040%20Nennweite%20von%20 Rohren-deutsch.pdf [retrieved on 2019-12-03]

## Beschreibung

Die Erfindung betrifft ein Verfahren zur Herstellung eines Metallrohr-Metallhülse-Metallkörper-Verbundsystems eines Meßwandlers vom Vibrationstyp sowie eine mittels eines solchen Verfahrens hergestellte Baugruppe. Darüberhinaus betrifft die Erfindung einen eine solche Baugruppe umfassenden Meßaufnehmer vom Vibrationstyp, sowie ein vibronisches Meßgerät, insb. nämlich ein Coriolis-Massendurchfluß-Meßgerät, ein Dichte-Meßgerät bzw. ein Viskositäts-Meßgerät, zum Messen einer Massendurchflußrate, einer Dichten und/oder einer Viskosität eines strömungsfähigen Mediums.

Dem Fixieren eines Metallrohres, nämlich eines ein von einer metallischen Wandung umhülltes Lumen aufweisenden Rohrs, an einem eine Durchgangsöffnung aufweisenden Metallkörper dienlichen Verfahren sind, insb. auch im Zusammenhang mit der Herstellung von Meßwandlern vom Vibrationstyp, u.a. in der DE-A 102006011789, der US-A 2003/0084559, der US-A 2005/0172731, der US-A 2006/0083941, der US-A 2007/0277624, der US-A 2008/0124186, der US-A 56 10 342 oder der US-A 60 47 457 beschrieben, nicht zuletzt auch solche Verfahren, bei denen zunächst jeweils ein Teilbereich des jeweiligen Metallrohrs in der Durchgangsöffnung des jeweiligen Metallkörpers plaziert wird, derart, daß eine Mantelfläche des Metallrohrs und eine Innenfläche der Durchgangsöffnung einander zumindest teilweise kontaktieren, und hernach durch Verformen des jeweiligen Metallkörpers, derart, daß dieser dauerhaft radiale Kräfte in das Metallrohr einleitet, ein das Metallrohr am Metallkörper fixierender Kraftschluß bzw. ein aus Metallkörper und Metallrohr zusammengesetztes Verbundsystem gebildet wird. Der prinzipielle Aufbau sowie die prinzipielle Wirkungsweise wie auch Möglichkeiten der Verwendung solcher, mittels wenigstens eines als Meßrohrs dienlichen Metallrohrs gebildeter Meßaufnehmer vom Vibrationstyp sind dem Fachmann an und für sich bekannt, nicht zuletzt auch aus dem vorbezeichneten DE-A 102006011789, US-A 2003/0084559, US-A 2005/0172731, US-A 2006/0083941, US-A 2007/0277624, US-A 2008/0124186, US-A 56 10 342 bzw. US-A 60 47 457, aber u.a. auch aus der US- 2011/0146416, der US-A 2007/0151370, der US-A 2007/0186685, der US-A 2008/0127719, der US-A 2010/0251830, der US-A 2011/0265580, der US-A 57 96 011, oder der US-A 60 06 609. Bekanntlich ist das wenigstens eine als Meßrohr dienliche Metallrohr bei solchen Meßaufnehmern im besonderen dafür eingerichtet, in dessen Lumen ein zumindest zeitweise strömendes, Fluid, beispielsweise ein Gas, eine Flüssigkeit oder eine fließfähige Dispersion, zu führen, inbs. nämlich vom Fluid durchströmt und währenddessen so vibrieren gelassen zu werden, daß das Metallrohr mechanischen Schwingungen um eine diesem zugehörige statische Ruhelage ausführt, die geeignet sind, im strömenden Fluid von einer Massendurchflußrate abhängige Corioliskräfte und/oder von einer Viskosität abhängige Reibungskräfte und/oder von einer Dichte abhängige Trägheitskräfte zu induzieren, um daraus abgeleitet Meßwerte für die Massendurchflußrate, die Viskosität bzw. die Dichte zu ermitteln.

Zum Erzeugen von für einen Kraftschluß in einem Verbundsystem der vorbezeichneten Art erforderlichen Haltekräften wird bei einem in der US-A 60 47 457 bzw. US-A 2006/0083941 gezeigten Aufpreß-Verfahren der jeweilige Metallkörper kaltumgeformt, indem über eine äußere Mantelfläche des Metallkörpers radial nach innen gerichtete Verformungskräfte auf den Metallkörper ausgeübt werden, hier nämlich mittels einer über an die Mantelfläche des Metallkörpers flächig angelegte Preßbacken auf den Metallkörper einwirkende Preßmaschine. Nämliche Verformungskräfte sind hierbei so bemessen, daß im Ergebnis der Kaltumformung des Metallkörpers dieser sowie das Metallrohr zusätzlich elastische Verformungen erfahren, die insgesamt dafür ausreichen, ein unerwünschtes Lösen der Kraftschlußes verhindernde Haltekräfte zwischen der Innenfläche der Durchgangsöffnung und der diese kontaktierenden Mantefläche des Metallrohrs zu etablieren. Bei einem anderen, u.a. in der US-A 2003/0084559 bzw.

US-A 2006/0083941 gezeigten Verfahren zum Fixieren des Metallrohrs im Metallkörper wird dieser zwecks Bildung eines Kraftschlusses mit dem jeweiligen Meßrohr auf dieses jeweils thermisch aufgeschrumpft, ggf. unter Zwischenlage eines auf das Metallrohr aufgebrachten metallischen Mantels. Desweiteren können für einen Kraftschluß erforderliche Haltekräfte auch dadurch erzeugt werden, indem eine plastische Verformung des Metallrohrs herbeigeführt wird, derart, daß dieses durch über eine Innenfläche radial nach außen wirkende Verformungkräfte aufgeweitet wird. Das Aufweiten des Metallrohrs kann wiederum durch Kaltumformen erfolgen, beispielsweise, wie u.a. auch in der DE-A 102006011789 gezeigt, hydraulisch, nämlich mittels eines in das Lumen eingeleiteten Druckmediums, oder aber beispielsweise auch, wie in der US-A 56 10 342, der US-A 2006/0083941 bzw. der US-A 2005/0172731 beschrieben, durch ein Einwalz-Verfahren erfolgen. Bei einem solchen Einwalz-Verfahren wird eine in das Lumen des Metallrohrs verbrachten Walz-Werkzeuges verwendet, das zum Bewirken eines partiellen plastischen Verformens der Wandung gegen die Innenfläche der Wandung gedrückt gehalten und währenddessen entlang einer innerhalb eines vorgegeben Verformungsbereich des Metallrohrs, beispielsweise nämlich dem gesamten von der Durchgangsöffnung des Metallkörpers aufgenommen Teilbereich des Metallrohrs, verlaufenden, beispielsweise zirkulären bzw. schraubenlinienförmigen, Walz-Bahn geführt wird.

Ein Vorteil einer solchen, auf Kraftschluß basierenden Verbindung ist u.a. darin zu sehen, daß damit auch ein Metallrohr an einem solchen Metallkörper fixiert werden kann, der aus einem Material besteht, das mit dem Material der Wandung des Metallrohrs nicht stoffschlüssig verbunden, nämlich weder verschweißt, noch verlötet werden kann, bzw. mit dem das Metallrohr keine bzw. nur mit erheblichem technischen Aufwand vibrationsfest ausgestaltbare stoffschlüssige Verbindung eingehen kann. Nicht zuletzt das vorbezeichnete Einwalz-Verfahren wie auch das vorbezeichnete Aufpreß-Verfahren haben sich bei der Herstellung von Meßaufnehmern vom Vibrationstyp bewährt, insbesondere auch zum Fixieren eines als Meßrohr dienlichen Metallrohrs in einer Durchgangsöffnung eines als Endplatte eines Aufnehmer-Gehäuses bzw. eines Trägerelements dienlichen Metallkörpers. Dies nicht zuletzt auch deshalb, weil sowohl beim Einwalz-Verfahren wie auch das Aufpreß-Verfahren der jeweilige Kraftschluß auch durch Kaltumformen des Meßrohrs bzw. des Metallkörpers, nämlich unterhalb einer jeweiligen Rekristallisationstemperatur des zu verformenden Metalls herbeigeführt wird, mithin jedes der beiden Verfahren auch bei Raumtemperatur bzw. auch ohne Wärmezufuhr durchführbar ist. Darüberhinaus können mittels dieses Verfahrens auf sehr einfache, gleichwohl effektive Weise für eine vibrationsfeste Verbindung zwischen Metallrohr und Metallkörper ausreichend hohe bzw. an die jeweilige Nennweiten exakt angepaßte Haltekräfte erzielt. Zudem sind die so erzeugten Haltekräfte, mithin die damit hergestellten Kraftschluß-Verbindungen nicht nur hoch belastbar, sondern auch innerhalb sehr schmaler bzw. für eine hochwertige Serienfertigung akzeptabler Toleranzbereichen reproduzierbar. Außerdem ist weder beim Einwalz- noch beim Aufpreß-Verfahren die Verwendung eines in das jeweils zu verarbeitende Metallrohr einzufüllenden, mithin erhöhten technischen Aufwand verursachenden Druckmediums erforderlich.

Die EP 1 074 821 A2 offenbart ein weiteres Metallrohr-Metallhülse-Metallkörper-Verbundsystem gemäß dem Stand der Technik, bei dem eine Metallhülse ohne plastisch verformt zu werden durch einen Presssitz mit einem Metallkörper verbunden wird und bei dem ein Metallrohr mit einem Kaliber-zu-Wandstärke-Verhältnis von ungefähr 10 verwendet wird.

Ein Nachteil der vorbezeichneten aus dem Stand der Technik bekannten bzw. herkömmlich bei der Herstellung von Meßaufnehmrn vom Vibrationstyp angewendeten, auf Kaltumformung eines Metallkörpers und/oder eines Metallrohrs basierende Verfahren zum Fixieren nämlichen Metallrohrs an nämlichem Metallkörper, insb. auch des Einwalz- wie auch des Aufpreß-Verfahrens, besteht allerdings darin, daß die Wandung des jeweiligen Metallrohrs bzw. der Metallkörper zwecks Etablierung ausreichend hoher Haltekräfte über einen entsprechend großen sich axial, nämlich in Richtung einer gedachten Längsachse des Metallrohrs mit einer vorgebbaren Länge erstreckenden Verformungsbereich verformt werden muß. Nachdem zum einen nämlicher Verformungsbereich durchaus einen nennenswerten Beitrag zur gesamten Länge des jeweiligen Verbundsystems, mithin zur Einbauläge eines damit gebildeten Meßaufnehmers vom Vibrationstyp leistet, zum anderen Meßaufnehmer vom Vibrationstyp typischerweise Einbaulänge-zu-Nennweite-Verhältnisse von deutlich kleiner als 15:1 aufweisen sollen, ist die Länge des - für die eigentliche Schwingungsmessung selbstredend nicht nutzbaren - Verformungsbereich regelmäßig so gewählt, daß sie weniger als ein Doppeltes eines Kalibers des jeweiligen Metallrohrs beträgt, idealerweise lediglich etwa dem Kaliber entspricht. Dementsprechend eine Anwendung der eigentlich sehr vorteilhaften Einwalz- wie auch des Aufpreß-Verfahrens bislang für solche Verbundsysteme bzw. damit gebildet Meßaufnehmer vorbehalten, bei denen das jeweilige Metallrohr eine Wandstärke von mehr als 1,5 mm sowie ein Kaliber-zu-Wandstärke-Verhältnis, definiert durch ein Verhältnis des Kalibers des Metallrohrs zu dessen Wandstärke, mehr als 5, gleichwohl weniger als 30 beträgt, idealerweise nämlich zwischen 10 und 20 liegt.

Gleichwohl besteht in zunehmendem Maße ein Interesse auch an solchen Meßaufnehmern vom Vibrationstyp, mithin an solchen durch Kaltumformung herstellbaren Verbundsystem, bei denen die jeweiligen als Meßrohre dienlichen Metallrohre auch eine weniger als 1,5 mm betragende bzw. im Vergleich zum jeweiligen Kaliber geringere Wandstärke, mithin ein mehr als 20 betragendes Kaliber-zu-Wandstärke-Verhältnis aufweisen sollen, beispielsweise zwecks Verbesserung einer Meßempfindlichkeit und/oder zwecks Verringerung einer Länge des jeweiligen Meßrohrs, um im Ergebnis Meßaufnehmer mit kürzeren Einbaulängen bzw. auch bei Verwendung eines abschnittsweise gebogenen Meßrohrs kompaktere Meßaufnehmer als bis anhin bereitstellen zu können.

Ein Aufgabe der Erfindung besteht daher darin, ein Verfahren zum Fixieren eines Metallrohrs an einem Metallkörper anzugeben, das dafür geeignet ist, ein als Meßrohr eines Meßwandlers vom Vibrationstyp dienliches Metallrohr mit einer Wandstärke die kleiner als 2 mm, insb. kleiner als 1,5 mm, ist bzw. einem Kaliber-zu-Wandstärke-Verhältnis von mehr als 20 mittels Kraftschluß an einem Metallkörper zu fixieren, bzw. das dafür geeignet ist, eine Kraftschluß-Verbindung mit im Vergleich zu herkömmlichen Kraftschluß-Verbindungen erhöhten Haltekräften herzustellen.

Zur Lösung der Aufgabe besteht die Erfindung in einem Verfahren gemäß dem angefügten unabhängigen Patentanspruch 1.

Ferner besteht die Erfindung in einem Metallrohr-Metallhülse- Metallkörper-Verbundsystem gemäß dem unabhängigen Anspruch 15.

Desweiteren besteht die Erfindung in einem Meßaufnehmer vom Vibrationstyp mit ein einem solchen Metallrohr-Metallhülse-Metallkörper-Verbundsystem, wobei das Metallrohr dafür eingerichtet ist, in dessen Lumen ein, beispielsweise zumindest zeitweise strömendes, Fluid, beispielsweise ein Gas, eine Flüssigkeit oder eine fließfähige Dispersion, zu führen.

Darüberhinaus besteht die Erfindung in einem vibronischen Meßgerät, beispielsweise einem Coriolis-Massendurchfluß-Meßgerät, einem Dichte-Meßgerät und/oder einem Viskositäts-Meßgerät, zum Messen wenigstens einer Meßgröße, beispielsweise einer Massendurchflußrate, einer Dichte und/oder einer Viskosität, eines, beispielsweise in einer angeschlossenen Rohrleitung, strömenden Fluids, beispielsweise eines Gases, einer Flüssigkeit oder einer fließfähigen Dispersion, welches Meßgerät zum Führen des Fluids einen solchen Meßaufnehmer sowie eine, beispielsweise mittels eines Mikroprozessors gebildete, mit dem Meßaufnehmer elektrisch verbundene Meß- und Betriebs-Elektronik umfaßt.

Ausgestaltungen und Weiterbildungen der Erfindung sind in den abhängigen Ansprüchen spezifiziert.

Ein Grundgedanke der Erfindung besteht darin, eine zur Etablierung von für einen auf Kaltumformung basierenden Kraftschluß zwischen Metallrohr und Metallkörper ausreichenden Haltkräfte eigentlich ungeeignete Dimensionierung nämlichen Metallrohrs, beispielsweise aufgrund einer zu geringen Wandstärke bzw. eines zu großen Kaliber-zu-Wandstärke-Verhältnisses, dadurch zu kompensieren, daß auf einem Teilbereich des Metallrohrs zunächst eine Metallhülse aufgeschoben und daß hernach Metallrohr und Metallhülse unter Bildung eines Metallhülse-Metallrohr-Verbundsystems miteinander mechanisch fest verbunden werden, beispielsweise nämliche miteinander verschweißt bzw. verlötet werden, derart, daß im Ergebnis eine Gesamt-Wandstärke bzw. ein Kaliber-zu-Wandstärke-Verhältnis nämlichen Metallhülse-Metallrohr-Verbundsystems die für die Bildung eines Kraftschlusses geeigneten - nämlich beispielsweise lediglich einen relativ kurzen Verformungsbereich erfordernde - Ausmaße aufweisen. Im Anschluß daran kann das so gebildete Metallhülse-Metallrohr-Verbundsystems, mithin das darin fest verankerte Metallrohr mittels konventioneller, gleichwohl bewährter Vorrichtungen bzw. Methoden, in vorteilhafter Weise, nämlich auch unter Anwendung eines etablierten Einwalz- und/oder Aufpreß-Verfahrens bzw. auch unter Verwendung der für solche Verfahren bereits konfektionierten Vorrichtungen, am Metallkörper fixiert werden.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fig. 1a, 1b: in verschiedenen Seitenansichten teilweise geschnitten ein Ausführungsbeispiel eines, insb. für die Verwendung in einem Meßaufnehmer vom Vibrationstyp geeigneten, Metallrohr-Metallhülse-Metallkörper-Verbundsystems;
- Fig. 2a, 2b: in verschiedenen Seitenansichten teilweise geschnitten ein Ausführungsbeispiel eines mittels eines Metallrohr-Metallhülse-Metallkörper-Verbundsystems gemäß der Fig. 1a, 1b gebildeten vibronischen Meßgeräts;
- Fig. 3: schematisch nach Art eines Blockschaltbildes ein Ausführungsbeispiel eines vibronischen Meßgeräts mit einem Meßaufnehmer vom Vibrationstyp sowie einer damit elektrisch verbundenen Meßgerät-Elektronik;
- Fign. 4a-4d: schematisch Schritte eines Verfahrens zum Fixieren eines Metallrohrs an einem Metallkörper bzw. zur Bildung eines Metallrohr-Metallhülse-Metallkörper-Verbundsystems gemäß den Fig. 1a, 1b;
- Fig. 5a, 5b: schematisch eine Ausgestaltungsvariante für das in den Fign. 4a-4d gezeigte Verfahren; und
- Fig. 6a, 6b: schematisch eine weitere Ausgestaltungsvariante für das in den Fign. 4a-4d gezeigte Verfahren.

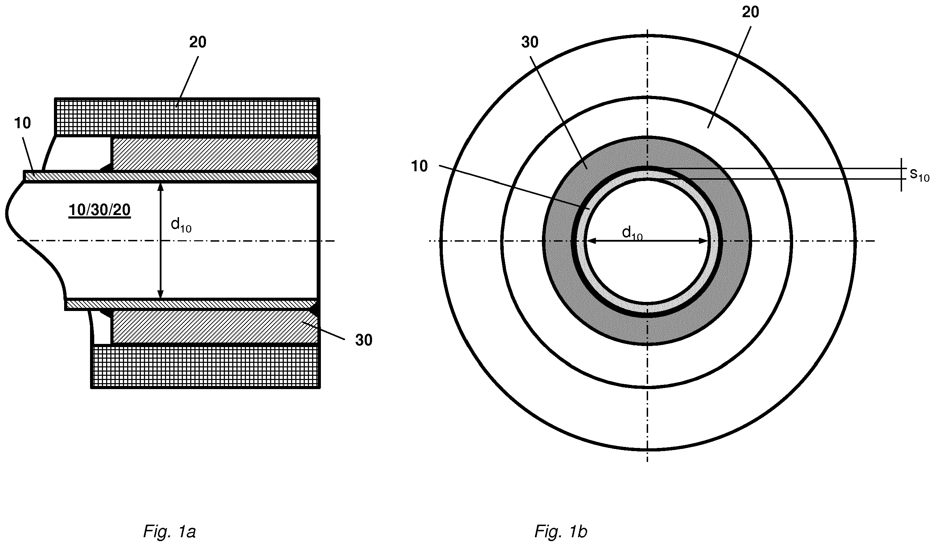

In den Fig. 1a und 1b ist verschiedenen Seitenansichten teilweise geschnitten ein mittels eines, insb. zumindest abschnittsweise kreiszylindrischen, Metallrohrs 10 - nämlich eines ein von einer metallischen Wandung umhülltes Lumen aufweisenden Rohrs -, mittels eines Metallkörpers 20 sowie mittels einer Metallhülse 30 - nämlich einer ein von einer metallischen Wandung umhülltes Lumen aufweisenden Hülse - gebildetes Metallrohr-Metallhülse-Metallkörper-Verbundsystem 10/30/20 schematisch dargestellt.

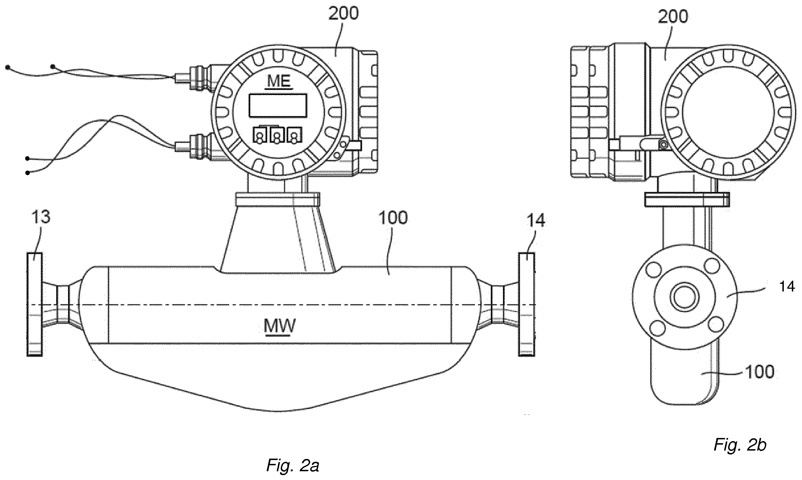

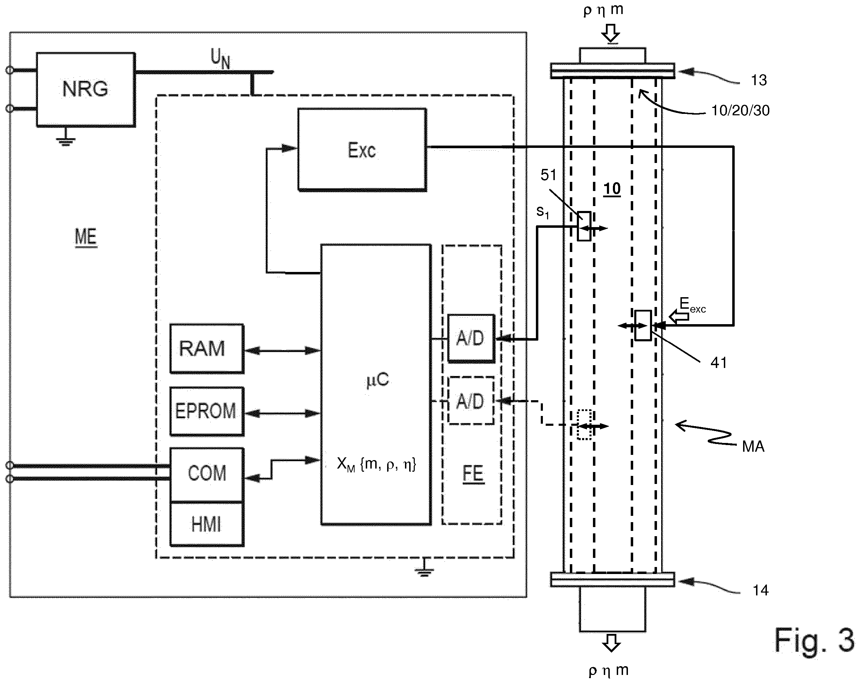

Das Metallrohr 10 ist nach einer Ausgestaltung der Erfindung im besonderen dafür eingerichtet, in nämlichem Lumen ein, insb. zumindest zeitweise strömendes, Fluid, beispielsweise ein Gas, eine Flüssigkeit oder eine fließfähige Dispersion, zu führen. Das Metallrohr-Metallhülse-Metallkörper-Verbundsystem 10/30/20 kann demnach, wie aus einer Zusammenschau der Fig. 2a, 2b und 3 ersichtlich, beispielsweise auch Bestandteil eines Meßaufnehmers MA sein, bei dem das Metallrohr als vom Fluid durchströmtes Meßrohr dient, bzw. eines mittels eines solchen Meßaufnehmers gebildeten Meßgerät, etwa eines in den Verlauf einer Rohrleitung einsetzbaren In-Line-Meßgeräts, sein. Dem Rechnung tragend besteht die Wandung des Metallrohrs gemäß einer Ausgestaltung der Erfindung aus einem für in solchen Meßaufnehmern verwendete Meßrohre typischen Material, beispielsweise nämlich Titan, Tantal, Zirkonium, einer Titan-Legierung, einem rostfreiem Edelstahl, einer Tantal-Legierung, einer Zirkonium-Legierung oder einer Nickelbasislegierung. Nach einer weiteren Ausgestaltung der Erfindung ist ferner vorgesehen, daß die Wandung der Metallhülse aus einem Material besteht, daß mit dem Material, aus dem die Wandung des Metallrohrs besteht, stoffschlüssig verbindbar, insb. nämlich verlötbar und/oder verschweißbar, ist. Demnach kann die Wandung der Metallhülse beispielsweise auch aus dem gleichen Material, wie die Wandung des Metallrohrs bestehen.

Nach einer weiteren Ausgestaltung der Erfindung ist das Metallrohr-Metallhülse-Metallkörper-Verbundsystem 10/30/20 Bestandteil eines Meßaufnehmer vom Vibrationstyp, nämlich eines Meßaufnehmers MA, bei dem das als Meßrohr dienliche Metallrohr weiters dafür eingerichtet ist, vom Fluid durchströmt und währenddessen vibrieren gelassen zu werden. Dies im besonderen in der Weise, daß nämliches Metallrohr, wie in Fig. 3 angedeutet, mechanischen Schwingungen um eine diesem zugehörige statische Ruhelage ausführt, die geeignet sind, im strömenden Fluid von einer Massendurchflußrate m abhängige Corioliskräfte und/oder von einer Viskosität η des Fluids abhängige Reibungskräfte und/oder von einer Dichte ρ des Fluids abhängige Trägheitskräfte zu induzieren. Der Meßaufnehmer MA kann beispielsweise ein das Metallrohr umhüllendes Aufnehmer-Gehäuse 100 aufweisen und zudem dafür ausgestaltet sein, mittels Anschlußflanschen 13, 14 in der Verlauf einer nämliches Fluid zu- bzw. wieder abführenden Rohrleitung eingesetzt zu werden, derart, daß das Metallrohr 10, wie in Fig. 3 angedeutet, mit der Rohrleitung unter Bildung eines durchgehenden Strömungspfades kommuniziert.

Mittels nämlichen Meßaufnehmers MA, mithin mittels des darin enthaltenen Metallkörper-Metallhülse-Metallrohr-Verbundsystems 10/20/30 kann ferner zudem ein vibronisches Meßgerät, beispielsweise ein Coriolis-Massendurchfluß-Meßgerät, ein Dichte-Meßgerät oder auch ein Viskositäts-Meßgerät gebildet sein, das dafür vorgesehen ist, wenigstens eine Meßgröße, beispielsweise eine Massendurchflußrate, eine Dichte und/oder eine Viskosität, eines Fluids zu ermitteln bzw. entsprechende Meßwerte X zu generieren. Dafür weist das vibronische Meßgerät ferner eine, z.B. mittels eines Mikroprozessors gebildete, Meß- und Betriebs-Elektronik ME auf, die wie aus einer Zusammenschau in Fig. 2a bzw. 2b angedeutet, in einem Elektronik-Gehäuse 200 untergebracht und mit dem Meßaufnehmer, nämlich - wie auch in Fig. 3 angedeutet - sowohl mit wenigstens einem dem Anregen und Aufrechterhalten mechanischer Schwingungen des Metallrohrs dienenden Schwingungserreger 41 des Meßaufnehmer als auch mit wenigstens einem dem Erfassen mechanischer Schwingungen des Metallrohrs und Generieren eines mechanischer Schwingungen des Metallrohrs repräsentierenden Schwingungsmeßsignals s₁ dienenden Schwingungssensor 51 elektrisch verbunden ist.

Nicht zuletzt für den vorbezeichneten Fall, daß das Metallrohr 10 als Meßrohr eines Meßaufnehmers vom Vibrationstyp bzw. eines damit gebildeten vibronischen Meßgeräts dient, weist die Metallhülse 30 eine axiale Länge auf, die, wie auch aus Fig. 1a ohne weiteres ersichtlich, kleiner als eine axiale Länge, die das Metallrohr 10 aufweist, ist bzw. ist die axiale Länge des Metallrohrs größer als eine axiale Länge, die die Durchgangsöffnung aufweist. Darüberhinaus ist das Metallrohr-Metallhülse-Metallkörper-Verbundsystem 10/30/20 gemäß einer Ausgestaltung der Erfindung ferner so ausgestaltet, daß die Wandung des Metallrohrs eine Wandstärke s₁₀ aufweist, die kleiner als 2 mm, insb. auch kleiner als 1,5 mm, ist. Erfindungsgemäß ist das Metallrohr-Metallhülse-Metallkörper-Verbundsystem 10/30/20 ferner so ausgestaltet, daß das Metallrohr ein Kaliber-zu-Wandstärke-Verhältnis d₁₀/s₁₀, definiert durch ein Verhältnis eines Kalibers d₁₀ des Metallrohrs zu nämlicher Wandstärke sio, aufweist, das größer als 20, insb. größer als 24, ist.

Wie aus der Zusammenschau der Fig. 1a und 1b ersichtlich, ist beim erfindungsgemäßen Metallrohr-Metallhülse-Metallkörper-Verbundsystem 10/30/20 das Metallrohr mit einem - hier endständigen bzw. kreiszylindrischen - Teilbereich in das Lumen der Metallhülse positioniert, derart, daß die Metallhülse das Metallrohr umspannt bzw. daß eine Mantelfläche des Metallrohrs und eine Innenfläche der Metallhülse einander zumindest teilweise kontaktieren. Ferner weist der Metallkörper des Metallrohr-Metallhülse-Metallkörper-Verbundsystems 10/30/20 eine Durchgangsöffnung auf, in der die Metallhülse 30 zusammen mit dem Metallrohr 10 positioniert sind, derart, daß eine Mantelfläche der Metallhülse und eine Innenfläche der Durchgangsöffnung einander zumindest teilweise kontaktieren. Das Metallrohr 10 des erfindungsgemäßen Metallrohr-Metallhülse-Metallkörper-Verbundsystems 10/30/20 kann beispielsweise ein durchgängig gerades, mithin hohlzylindrisches Rohr sein. Es kann beispielsweise aber auch gekrümmt sein, derart, daß der sich innerhalb der Metallhülse bzw. innerhalb der Durchgangsöffnung positionierte Teilbereich des Metallrohrs hohlzylindrisch ist und an einen sich außerhalb des Lumens der Hülse, mithin außerhalb der Durchgangsöffnung erstreckenden Teilbereich des Metallrohrs angrenzt, der zumindest teilweise bogenförmig, insb. kreisbogenförmig, ist. Ferner kann es, nicht zuletzt für den vorbezeichneten Fall, daß das Metallrohr als Meßrohr eines Meßaufnehmers vom Vibrationstyp dienlich ist, durchaus von Vorteil sein, Metallhülse und Durchgangsöffnung so zu dimensionieren, daß die Metallhülse eine axiale Länge aufweist, die kleiner als die axiale Länge der Durchgangsöffnung ist.

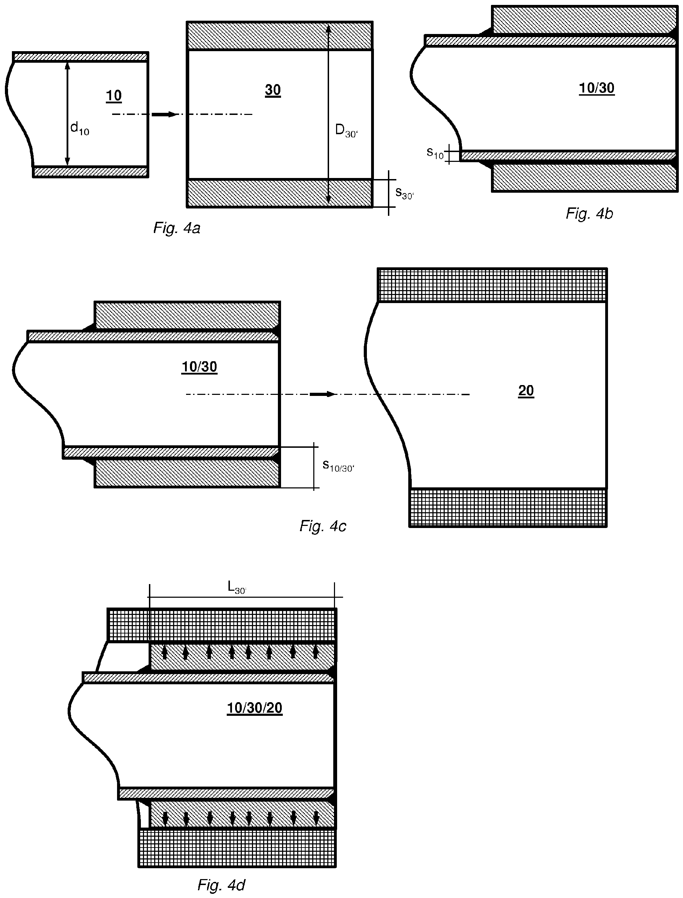

Zur Herstellung des Metallrohr-Metallhülse-Metallkörper-Verbundsystems 10/30/20, mithin zum Fixieren des Metallrohrs am Metallkörper wird, wie in Fig. 4a schematisch angedeutet, zunächst der Teilbereich des Metallrohrs im Lumen der Metallhülse 30 so plaziert, daß die Mantelfläche des Metallrohrs und die Innenfläche der Metallhülse einander zumindest teilweise kontaktieren, um hernach die Metallhülse am in deren Lumen plazierten Teilbereich des Metallrohrs unter Bildung eines Metallrohr-Metallhülse-Verbundsystems 10/30 zu fixieren (Fig. 4b). Das Fixieren der Metallhülse am in deren Lumen plazierten Teilbereich des Metallrohrs erfolgt nach einer Ausgestaltung der Erfindung durch Bilden einer stoffschlüssigen Verbindung zwischen der Metallhülse und dem in deren Lumen verbrachten Metallrohr 10, beispielsweise nämlich, wie auch in Fig. 4b angedeutet, mittels einer Schweißverbindung bzw. einer Lötverbindung. Das so, beispielsweise also durch Verlöten bzw. Verschweißen von Metallhülse und Metallrohr, gebildete Metallrohr-Metallhülse-Verbundsystem 10/30 wird, wie in Fig. 4c schematisch angedeutet, hernach in der Durchgangsöffnung des Metallkörpers 20 plaziert, derart, daß die Mantelfläche der Metallhülse und die Innenfläche der Durchgangsöffnung im Ergebnis einander zumindest teilweise kontaktieren. Nachdem das Metallrohr-Metallhülse-Verbundsystem 10/30 innerhalb der Durchgangsöffnung des Metallkörpers positioniert ist, wird erfindungsgemäß, wie auch in Fig. 4d mittels Pfeilen symbolisiert dargestellt, zumindest die Metallhülse des in der Durchgangsöffnung plazierten Metallrohr-Metallhülse-Verbundsystems 10/30 plastisch verformt, derart, daß im Ergebnis ein Kraftschluß zwischen der Innenfläche der Durchgangsöffnung und der Mantelfläche der Metallhülse gebildet, mithin das Metallrohr-Metallhülse-Metallrohr-Verbundsystem 10/30 hergestellt ist. Die so herbeigeführte plastische Verformung der Metallhülse 30 ist dabei auf einen vorgegebenen bzw. reservierten Verformungsbereich der Metallhülse 30 einen beschränkt, der sich axial, nämlich in Richtung einer gedachten Längsachse der Metallhülse bzw. des damit schlußendlich gebildeten Metallrohr-Metallhülse-Metallkörper-Verbundsystems 10/30/20 mit einer vorgegebenen Bereichslänge L_{30'} erstreckt. Im in Fig. 4d gezeigten Metallrohr-Metallhülse-Metallkörper-Verbundsystems 10/30/20 entspricht nämliche Bereichslänge L_{30'} praktisch einer gesamten Länge der Metallhülse. Demgemäß kann sich der Verformungsbereich, nicht zuletzt für den erwähnten Fall, daß die axiale Länge der Metallhülse kleiner als die axiale Länge der Durchgangsöffnung ist, beispielsweise auch über die gesamte Metallhülse 30 erstrecken.

Das plastische Verformen kann beispielsweise durch Kaltumformen, nämlich ein unterhalb einer Rekristallisationstemperatur des Metalls der Wandung der Metallhülse, insb. nämlich auch bei Raumtemperatur, erfolgen. Dadurch ist es ermöglicht, einen Metallkörper aus einem Material zu verwenden, das zum einen vom jeweiligen Material der Wandung des Metallrohrs bzw. der Metallhülse verschieden ist, daß aber darüberhinaus nicht notwendigerweise mit dem Material der Wandung der Metallhülse verlöt- oder verschweißbar zu sein braucht. Im Ergebnis dessen kann der Metallkörper beispielsweise auch dann aus einem kostengünstigen Stahl, ggf. auch einem rostfreien Edelstahl, bestehenden, wenn die Wandung des Metallrohrs bzw. der Metallhülse beispielsweise aus Titan, Tantal bzw. einer von deren Legierungen besteht.

Um zu gewährleisten, daß zum einen die Metallhülse 30 eine für einen haltbaren, insb. auch vibrationsfesten, Kraftschluß ausreichende plastische Verformung, zum anderen aber das Metallrohr 10 nur eine möglichst geringfügige bzw. idealerweise keine plastische Verformung erfahren, ist erfindungsgemäß eine initiale, nämlich vor der plastischen Verformung der Metallhülse meßbare Wandstärke s_{30'} der Wandung der Metallhülse 30 größer als 1 mm, insb. größer als 2 mm gewählt bzw. ist nämliche initiale Wandstärke s_{30'}, wie auch in den Fig. 4a bzw. 4b jeweils angedeutet, so gewählt, daß sie größer als eine Wandstärke s₁₀ der Wandung des Metallrohrs ist; dies im besonderen auch in der Weise, daß die Metallhülse einen initialen, nämlich vor deren plastischer Verformung meßbaren Außendurchmesser D_{30'} aufweist, der um mindestens 4 mm, insb. um mehr als 5 mm, größer als ein Kaliber D₁₀ des Metallrohr ist. Nach einer weiteren Ausgestaltung der Erfindung weist das Metallrohr-Metallhülse- Verbundsystem 10/30/20 zwecks Erzielung ausreichend hoher Haltekräfte durch den Kraftschluß eine Gesamt-Wandstärke s_{10/30'} auf, die größer als 2 mm, insb. größer als 3 mm, ist, bzw. weist das Metallrohr-Metallhülse-Verbundsystem 10/30/20 ein Kaliber-zu-Wandstärke-Verhältnis d₁₀/s_{10/30'} auf, das kleiner als 30, insb. kleiner als 25, ist. Die Gesamt-Wandstärke s_{10/30'} entspricht hierbei einer Summation einer Wandstärke s₁₀ der Wandung des Metallrohrs und einer initialen Wandstärke s_{30'} der Wandung der Metallhülse, nämlich einer vor deren plastischer Verformung meßbaren Wandstärke, während das Kaliber-zu-Wandstärke-Verhältnis d₁₀/s_{10/30'} einem Verhältnis eines Kalibers d₁₀ des Metallrohrs zu nämlicher Gesamt-Wandstärke s_{10/30'} des Metallrohr-Metallhülse-Verbundsystems entspricht. Nicht zuletzt für den erwähnten Fall, daß das erfindungsgemäße Metallrohr-Metallhülse-Metallkörper-Verbundsystem 10/30/20 als Bestandteil eines Meßaufnehmers vom Vibrationstyp, mithin das Metallrohr als Meßrohr dient, kann es zwecks einer weiteren Erhöhung der durch das plastische Verformen der Metallhülse etablierten Haltekräfte zudem von Vorteil sein, zusätzlich zu dem so gebildeten Kraftschluß auch einen in axialer Richtung wirkenden Formschluß auszubilden, beispielsweise indem, wie auch in der eingangs erwähnten US-A 2006/0083941 vorgeschlagen, in die Innenfläche der Durchgangsöffnung eine Ringnut bzw. ein Innengewinde eingeformt ist und/oder indem in die Mantelfläche der Metallhülse ein Außengewinde eingeformt ist. Alternativ oder in Ergänzung dazu kann zudem auch ein einem Verdrehen des Metallrohr-Metallhülse-Verbundsystems relativ zum Metallkörper entgegenwirkender Fromschluß ausgebildet werden, beispielsweis indem, wie auch in der eingangs erwähnten US-A 2005/0172731 vorgeschlagen, die Innenfläche der Durchgangsöffnung des Metallkörpers eine Längsnut aufweist.

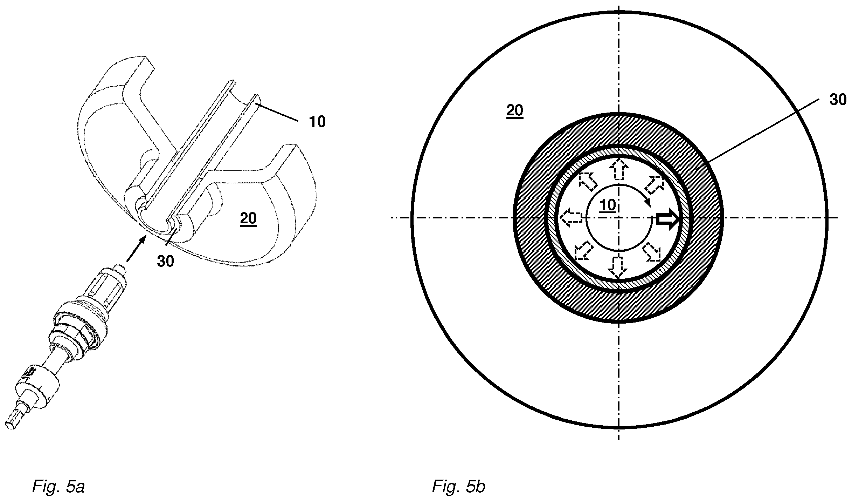

Zum Erzeugen von für das plastische Verformen zumindest der Metallhülse 30 ausreichenden - beispielsweise radial bzw. in Richtung der Innenfläche der Durchgangsöffnung wirkenden - Verformungskräften kann das Metallrohr-Metallhülse-Verbundsystems 10/30 z.B. radial aufgeweitet werden, etwa indem der im Lumen der Metallhülse plazierte Teilbereich des Metallrohrs 10 entsprechend elastisch verformt wird; dies beispielsweise soweit, bis durch eine mit der Aufweitung des Metallrohr-Metallhülse-Verbundsystems 10/30 einhergehende, radiale Rückstellkräfte bewirkende elastische Verformung auch des Metallkörpers die für den Kraftschluß insgesamt angestrebten Haltekräfte erreicht sind. Daher ist nach einer weiteren Ausgestaltung der Erfindung vorgesehen, daß das plastische Verformen zumindest der Metallhülse erfolgt, indem der im Lumen der Metallhülse plazierte Teilbereich des Metallrohrs elastisch verformt wird bzw. indem das in der Durchgangsöffnung plazierte Metallrohr-Metallhülse-Verbundsystems 10/30 radial, mithin in Richtung der Innenfläche der Durchgangsöffnung aufgeweitet wird. Nämliches Aufweiten des Metallrohr-Metallhülse-Verbundsystems 10/30 kann, wie in den Fig. 5a angedeutet, beispielsweise unter Verwendung eines in das Lumen des Metallrohrs des in der Durchgangsöffnung plazierten Metallrohr-Metallhülse-Verbundsystems eingebrachten Walz-Werkzeuges erfolgen, das, wie in Fig. 5b mittels Pfeilen symbolisiert, zum Bewirken partieller plastischer Verformungen zumindest der Metallhülse 30 gegen die Innenfläche der Wandung gedrückt gehalten und währenddessen entlang einer innerhalb des Teilbereichs des Metallrohrs 10 verlaufenden, beispielsweise zirkulären bzw. schraubenlinienförmigen, Walz-Bahn geführt wird. Dementsprechend kann zum Fixieren des in der Durchgangsöffnung des Metallkörpers positionierten Metallrohr-Metallhülse-Verbundsystems beispielsweise auch ein mit einem in der eingangs erwähnten US-A 56 10 342, US-A 2006/0083941 bzw. US-A 2005/0172731 gezeigten Einwalz-Verfahren vergleichbares Verfahren angewendet werden, ggf. auch unter Verwendung von für ein solches Einwalz-Verfahren bereits errichteter Betriebsmittel. Um zum einen ein Positionieren bzw. Hantieren des vorbezeichneten Walz-Werkzeuges im Lumen des Metallrohrs zu ermöglichen, zum anderen aber auch für ein Aufweiten ausreichend hohe Verformungskräfte erzeugen zu können ist nach einer weiteren Ausgestaltung der Erfindung vorgesehen, daß das Metallrohr ein Kaliber d₁₀ aufweist, das größer als 5 mm, insb. größer als 8 mm, ist. Sehr gute Ergebnisse, nicht zuletzt auch hinsichtlich der Haltekräfte, können hierbei im besonderen auch für die Fälle erzielt werden, bei denen das vorbezeichnete Kaliber-zu-Wandstärke-Verhältnis d₁₀/s_{10/30'} des Metallrohr-Metallhülse-Verbundsystems größer als 10, zumindest aber größer als 5 gewählt ist.

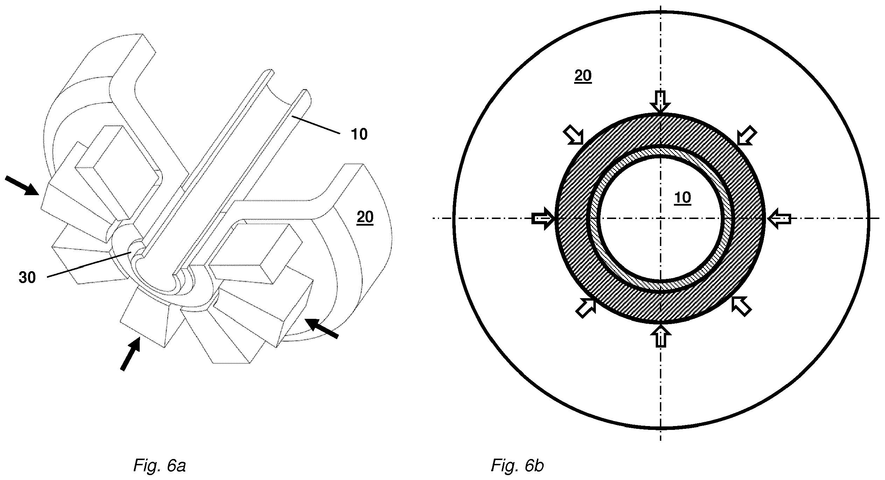

Alternativ oder in Ergänzung zum vorbezeichneten Aufweiten des Metallrohr-Metallhülse-Verbundsystems besteht eine weitere Möglichkeit zum Erzeugen von für das plastische Verformen der Metallhülse 30 ausreichenden Verformungskräfte u.a. auch darin, auch den Metallkörper plastisch zu Verformen, beispielsweise durch Kaltumformen, nachdem das Metallrohr-Metallhülse-Verbundsystem in der Durchgangsöffnung plaziert worden ist. Dies kann beispielsweise unter Anwendung eines in der eingangs erwähnten US-A 60 47 457 bzw. US-A 2006/0083941 gezeigten Aufpreß-Verfahrens erfolgen, derart, daß zum plastischen Verformen der Metallhülse 30 des in der Durchgangöffnung befindlichen Metallrohr-Metallhülse-Verbundsystems 10/30 zusammen mit dem Metallkörper 20, wie in Fig. 6a schematisch dargestellt, zunächst ein Preß-Werkzeug an eine Mantelfläche des Metallkörpers angesetzt und hernach mittels nämlichen Preß-Werkzeuges der Metallkörper in Richtung der Mantelfläche der Metallhülse des in der Durchgangsöffnung plazierten Metallrohr-Metallhülse-Verbundsystems zusammengedrückt wird, und zwar so weit, daß im Ergebnis der Metallkörper mit dem Metallrohr-Metallhülse-Verbundsystems 10/30 verpreßt wird und dabei zumindest auch die Metallhülse 30 entsprechende plastische Verformungen erfährt; dies beispielsweise derart, daß das im Ergebnis die Metallhülse 30 und/oder das Metallrohr 10 entsprechende, nämlich das Metallrohr-Metallhülse-Verbundsystem unter Bildung des Kraftschlusses gegen den Metallkörper gedrückt haltende Rückstellkräfte ausbildende elastische Verformungen erfahren.

## Patentansprüche

1. Verfahren zur Herstellung eines Metallrohr-Metallhülse-Metallkörper-Verbundsystems (10/30/20) eines Meßwandlers vom Vibrationstyp, welches Verfahren umfaßt:
- Plazieren eines Teilbereichs eines Metallrohrs (10) in einem Lumen einer Metallhülse (30), nämlich einer eine das Lumen umhüllende metallische Wandung aufweisenden Hülse, derart, daß eine Mantelfläche des Metallrohrs und eine Innenfläche der Metallhülse einander zumindest teilweise kontaktieren;
- Fixieren der Metallhülse am in deren Lumen plazierten Teilbereich des Metallrohrs zum Bilden eines Metallrohr-Metallhülse-Verbundsystems (10/30);
- Plazieren des Metallrohr-Metallhülse-Verbundsystems (10/30) in der Durchgangsöffnung eines Metallkörpers (20), derart, daß eine Mantelfläche der Metallhülse und eine Innenfläche der Durchgangsöffnung einander zumindest teilweise kontaktieren; und plastisches Verformen zumindest der Metallhülse des in der Durchgangsöffnung plazierten Metallrohr-Metallhülse-Verbundsystems zum Bilden eines Kraftschlusses zwischen nämlicher Innenfläche der Durchgangsöffnung und nämlicher Mantelfläche der Metallhülse;
- wobei das Metallrohr ein Kaliber-zu-Wandstärke-Verhältnis (d₁₀/s₁₀), definiert durch ein Verhältnis eines Kalibers (d₁₀) des Metallrohrs zu einer Wandstärke (s₁₀) der Wandung nämlichen Metallrohrs, aufweist, das größer als 20 ist; und
- wobei die Wandung der Metallhülse (30) eine initiale Wandstärke (s_{30'}) aufweist, die größer als 1 mm und/oder größer als die Wandstärke (s₁₀) der Wandung des Metallrohrs ist.

2. Verfahren gemäß einem der vorherigen Ansprüche, wobei der Schritt des Fixierens der Metallhülse am in deren Lumen plazierten Teilbereich des Metallrohrs einen Schritt des Bildens einer stoffschlüssigen Verbindung, insb. nämlich einer Schweißverbindung bzw. einer Lötverbindung, zwischen der Metallhülse und dem Metallrohr umfaßt.

3. Verfahren gemäß einem der vorherigen Ansprüche, wobei der Schritt des Fixierens der Metallhülse am in deren Lumen plazierten Teilbereich des Metallrohrs einen Schritt des Verlötens von Metallhülse und Metallrohr umfaßt.

4. Verfahren gemäß Anspruch 1 oder 2, wobei der Schritt des Fixierens der Metallhülse am in deren Lumen plazierten Teilbereich des Metallrohrs einen Schritt des Verschweißens von Metallhülse und Metallrohr umfaßt.

5. Verfahren gemäß einem der vorherigen Ansprüche,
- weiters umfassend: elastisches Verformen des im Lumen der Metallhülse plazierten Teilbereichs des Metallrohrs zum Erzeugen einer für das plastische Verformen zumindest der Metallhülse ausreichenden Verformungskraft; und/oder
- weiters umfassend: plastisches Verformen, insb. nämlich Kaltumformen, auch des Metallkörpers zum Bilden des Kraftschlusses.

6. Verfahren gemäß dem vorherigen Anspruch, weiters umfassend: plastisches Verformen, insb. nämlich Kaltumformen, auch des Metallrohrs des in der Durchgangsöffnung plazierten Metallrohr-Metallhülse-Verbundsystems zum Bilden des Kraftschlusses.

7. Verfahren gemäß einem der vorherigen Ansprüche,
- wobei der Schritt des plastischen Verformens zumindest der Metallhülse einen Schritt des elastischen Verformens des im Lumen der Metallhülse plazierten Teilbereich des Metallrohrs umfaßt; und/oder
- wobei der Schritt des plastischen Verformens zumindest der Metallhülse einen Schritt des Aufweitens des in der Durchgangsöffnung plazierten Metallrohr-Metallhülse-Verbundsystems umfaßt; und/oder
- wobei der Schritt des plastisches Verformens zumindest der Metallhülse einen Schritt des Verwendens eines in das Lumen des Metallrohrs des in der Durchgangsöffnung plazierten Metallrohr-Metallhülse-Verbundsystems eingebrachten Walz-Werkzeuges zum Aufweiten nämlichen Metallrohr-Metallhülse-Verbundsystems in Richtung der Innenfläche der Durchgangsöffnung umfaßt; und/oder
- wobei der Schritt des plastisches Verformens zumindest der Metallhülse einen Schritt des Verwendens eines auf einer Mantelfläche des Metallkörpers plazierten Preß-Werkzeuges zum Verpressen des Metallkörpers in Richtung der Mantelfläche der Metallhülse des in der Durchgangsöffnung plazierten Metallrohr-Metallhülse-Verbundsystems umfaßt.

8. Verfahren gemäß einem der vorherigen Ansprüche,
- weiters umfassend: Einbringen eines Walz-Werkzeuges in das Lumen des Metallrohrs des in der Durchgangsöffnung plazierten Metallrohr-Metallhülse-Verbundsystems; und/oder
- weiters umfassend: plastisches Verformen des Metallkörpers zum Erzeugen einer für das plastische Verformen zumindest der Metallhülse ausreichenden Verformungskraft; und/oder
- weiters umfassend: Ansetzen eines Preß-Werkzeuges an eine Mantelfläche des Metallkörpers.

9. Verfahren gemäß einem der vorherigen Ansprüche,
- wobei die Wandung des Metallrohrs eine Wandstärke (s₁₀) aufweist, die kleiner als 2 mm ist; und/oder
- wobei das Metallrohr ein Kaliber (d₁₀) aufweist, das größer als 5 mm ist; und/oder
- wobei das Metallrohr ein Kaliber-zu-Wandstärke-Verhältnis (d10/s10), definiert durch ein Verhältnis eines Kalibers (d10) des Metallrohrs zu einer Wandstärke (s10) der Wandung nämlichen Metallrohrs, aufweist, das größer als 24 ist; und/oder
- wobei die Wandung der Metallhülse (30) eine initiale Wandstärke (s30') aufweist, die größer als 2 mm ist; und/oder
- wobei die Metallhülse einen initialen, nämlich vor deren plastischer Verformung meßbaren Außendurchmesser (D_{30'}) aufweist, der um mindestens 4 mm größer als ein Kaliber (d₁₀) des Metallrohr ist.

10. Verfahren gemäß einem der vorherigen Ansprüche, wobei das Metallrohr-Metallhülse-Verbundsystem (10/30) eine Gesamt-Wandstärke (s_{10/30'}), definiert durch eine Summation einer Wandstärke (s₁₀) der Wandung des Metallrohrs und einer initialen Wandstärke (s_{30'}) der Wandung der Metallhülse, aufweist, die größer als 2 mm ist.

11. Verfahren gemäß dem vorherigen Anspruch, wobei das Metallrohr-Metallhülse-Verbundsystem (10/30) ein Kaliber-zu-Wandstärke-Verhältnis (d₁₀/s_{10/30'}), definiert durch ein Verhältnis eines Kalibers (d₁₀) des Metallrohrs zur Gesamt-Wandstärke (s_{10/30'}) des Metallrohr-Metallhülse-Verbundsystems (10/30), aufweist, das kleiner als 30 ist.

12. Verfahren gemäß dem vorherigen Anspruch, wobei das Metallrohr-Metallhülse-Verbundsystem ein Kaliber-zu-Wandstärke-Verhältnis (d₁₀/s_{10/30'}) größer als 5 ist.

13. Verfahren gemäß einem der vorherigen Ansprüche,
- wobei der Metallkörper aus einem Stahl besteht; und/oder
wobei die Wandung der Metallhülse und der Metallkörper aus jeweils unterschiedlichen Materialien bestehen; und/oder
wobei die Wandung des Metallrohrs und der Metallkörper aus jeweils unterschiedlichen Materialien bestehen; und/oder
- wobei die Wandung der Metallhülse aus einem Material besteht, daß mit einem Material, aus dem die Wandung des Metallrohrs besteht, stoffschlüssig verbindbar ist.

14. Verfahren gemäß einem der vorherigen Ansprüche,
- wobei der Teilbereich des Metallrohrs kreiszylindrisch geformt ist; und/oder.
- wobei die Metallhülse eine axiale Länge aufweist, die kleiner als eine axiale Länge, die die Durchgangsöffnung aufweist, ist; und/oder
- wobei die Metallhülse eine axiale Länge aufweist, die kleiner als eine axiale Länge, die das Metallrohr aufweist, ist; und/oder
- wobei das Metallrohr eine axiale Länge aufweist, die größer als eine axiale Länge, die die Durchgangsöffnung aufweist, ist; und/oder
- wobei in die Innenfläche der Durchgangsöffnung eine Längsnut eingeformt ist; und/oder
- wobei in die Innenfläche der Durchgangsöffnung eine Ringnut eingeformt ist; und/oder
- wobei in die Innenfläche der Durchgangsöffnung ein Innengewinde eingeformt ist; und/oder
- wobei in die Mantelfläche der Metallhülse ein Außengewinde eingeformt ist.

15. Metallrohr-Metallhülse- Metallkörper-Verbundsystem (10/30/20) eines Meßwandlers vom Vibrationstyp, welches mittels eines Verfahrens gemäß einem der vorherigen Ansprüche hergestellt ist.

16. Metallrohr-Metallhülse-Metallkörper-Verbundsystem gemäß dem vorherigen Anspruch, wobei der Teilbereich des Metallrohrs an einen sich außerhalb des Lumens der Hülse, mithin außerhalb der Durchgangsöffnung erstreckenden Teilbereich des Metallrohrs angrenzt.

17. Meßaufnehmer vom Vibrationstyp, umfassend: ein Metallrohr-Metallhülse-Metallkörper-Verbundsystem gemäß einem der Ansprüche 15 bis 16, wobei das Metallrohr dafür eingerichtet ist, in dessen Lumen ein, insb. zumindest zeitweise strömendes, Fluid zu führen.

18. Meßaufnehmer gemäß dem vorherigen Anspruch, wobei das wenigstens eine Metallrohr weiters dafür eingerichtet ist, vom Fluid durchströmt und währenddessen vibrieren gelassen zu werden, insb. derart, daß nämliches Metallrohr mechanischen Schwingungen um eine diesem zugehörige statische Ruhelage ausführt, die geeignet sind, im strömenden Fluid von einer Massendurchflußrate, m, abhängige Corioliskräfte zu induzieren, und/oder daß nämliches Metallrohr mechanischen Schwingungen um eine diesem zugehörige statische Ruhelage ausführt, die geeignet sind, im strömenden Fluid von einer Viskosität, η, nämlichen Fluids abhängige Reibungskräfte zu induzieren, und/oder daß nämliches Metallrohr mechanischen Schwingungen um eine diesem zugehörige statische Ruhelage ausführt, die geeignet sind, im strömenden Fluid von einer Dichte, p, nämlichen Fluids abhängige Trägheitskräfte zu induzieren.

19. Vibronisches Meßgerät, insb. Coriolis-Massendurchfluß-Meßgerät, Dichte-Meßgerät und/oder Viskositäts-Meßgerät, zum Messen wenigstens einer Meßgröße, insb. einer Massendurchflußrate, einer Dichte und/oder einer Viskosität, eines, insb. in einer angeschlossenen Rohrleitung, strömenden Fluids, insb. eines Gases, einer Flüssigkeit oder einer fließfähigen Dispersion, welches Meßgerät umfaßt:
- zum Führen des Fluids einen Meßaufnehmer gemäß einem der Ansprüche 17 bis 18;
- sowie eine mit dem Meßaufnehmer elektrisch verbundene Meß- und Betriebs-Elektronik (ME).

## Claims

1. Procedure for the fabrication of a metal tube-metal sleeve-metal body composite system (10/30/20) of a vibronic-type transducer, said procedure comprising:
- The placing of a section of a metal tube (10) in an interior channel of a metal sleeve (30), namely a sleeve having a metal wall surrounding the interior channel, in such a way that a lateral surface of the metal tube and an interior surface of the metal sleeve are at least partially in contact;
- The fixing of the metal sleeve on the section of the metal tube placed in the sleeve's interior channel, to form a metal tube-metal sleeve composite system (10/30);
- The placing of the metal tube-metal sleeve composite system (10/30) in the passage opening of a metal body (20) in such a way that a lateral surface of the metal sleeve and an interior surface of the passage opening are at least partially in contact;
and the plastic deformation at least of the metal sleeve of the metal tube-metal sleeve composite system placed in the passage opening to form a force-type connection between said interior surface of the passage opening and said lateral surface of the metal sleeve;
- wherein the metal tube has a caliber-to-wall thickness ratio (dio/sio), defined by a ratio of a caliber (dio) of the metal tube to a wall thickness (sio) of the wall of said metal tube, which is greater than 20; and
- wherein the wall of the metal sleeve (30) has an initial thickness (s_{30'}) that is greater than 1 mm and/or greater than the wall thickness (sio) of the wall of the metal tube.

2. Procedure as claimed in one of the previous claims, wherein the step involving the fixing of the metal sleeve on the section of the metal tube inside the sleeve's interior channel comprises a step of forming a substance-to-substance connection, particularly a weld connection or a solder connection, between the metal sleeve and the metal tube.

3. Procedure as claimed in one of the previous claims, wherein the step involving the fixing of the metal sleeve on the section of the metal tube inside the sleeve's interior channel comprises a step involving the soldering of the metal sleeve and the metal tube.

4. Procedure as claimed in Claim 1 or 2, wherein the step involving the fixing of the metal sleeve on the section of the metal tube inside the sleeve's interior channel comprises a step involving the welding of the metal sleeve and the metal tube.

5. Procedure as claimed in one of the previous claims,
- further comprising: elastic deformation of the section of the metal tube placed in the interior channel of the metal sleeve for the purpose of generating sufficient deformation force for the plastic deformation at least of the metal sleeve; and/or
- further comprising: plastic deformation, particularly cold forming, also of the metal body for the purpose of forming a force-type connection.

6. Procedure as claimed in the previous claim, further comprising: plastic deformation, particularly cold forming, also of the metal tube of the metal tube-metal sleeve composite system placed in the passage opening, for the purpose of forming the force-type connection.

7. Procedure as claimed in one of the previous claims,
- wherein the step involving the plastic deformation at least of the metal sleeve comprises a step involving the elastic deformation of the section of the metal tube placed in the interior channel of the metal sleeve; and/or
- wherein the step involving the plastic deformation at least of the metal sleeve comprises a step involving the expansion of the metal tube-metal sleeve composite system placed in the passage opening; and/or
- wherein the step involving the plastic deformation at least of the metal sleeve comprises a step involving the use of a rolling tool, inserted into the interior channel of the metal tube of the metal tube-metal sleeve composite system placed in the passage, for the purpose of widening said metal tube-metal sleeve composite system in the direction of the interior surface of the passage opening; and/or
- wherein the step involving the plastic deformation at least of the metal sleeve comprises a step involving the use of a press tool placed on a lateral surface of the metal body for the purpose of pressing the metal body in the direction of the lateral surface of the metal sleeve of the metal tube-metal sleeve composite system placed in the passage opening.

8. Procedure as claimed in one of the previous claims,
- further comprising: the introduction of a rolling tool into the interior channel of the metal tube of the metal tube-metal sleeve composite system placed in the passage opening; and/or
- further comprising: the plastic deformation of the metal body to generate a deformation force that suffices for the plastic deformation at least of the metal sleeve; and/or
- further comprising: the positioning of a press tool on a lateral surface of the metal body.

9. Procedure as claimed in one of the previous claims,
- wherein the wall of the metal tube has a wall thickness (sio) that is less than 2 mm; and/or
- wherein the metal tube has a caliber (d₁₀) that is greater than 5 mm; and/or
- wherein the metal tube has a caliber-to-wall thickness ratio (d10/s10), defined by a ratio of a caliber (d₁₀) of the metal tube to a wall thickness (sio) of the wall of said metal tube, which is greater than 24; and/or
- wherein the wall of the metal sleeve (30) has an initial thickness (s30') that is greater than 2 mm; and/or
- wherein the metal sleeve has an initial outer diameter (D_{30'}), particularly measurable before the plastic deformation of the sleeve, which is at least 4 mm greater than a caliber (d₁₀) of the metal tube.

10. Procedure as claimed in one of the previous claims, wherein the metal tube-metal sleeve composite system (10/30) has a total wall thickness (s_{10/30'}) defined by a sum of a wall thickness (sio) of the wall of the metal tube and an initial wall thickness (s_{30'}) of the wall of the metal sleeve, which is greater than 2 mm.

11. Procedure as claimed in the previous claim, wherein the metal tube-metal sleeve composite system (10/30) has a caliber-to-wall thickness ratio (d₁₀/s_{10/30'}), defined by a ratio of a caliber (d₁₀) of the metal tube to the total wall thickness (s_{10/30'}) of the metal tube-metal sleeve composite system (10/30) that is less than 30.

12. Procedure as claimed in the previous claim, wherein the metal tube-metal sleeve composite system has a caliber-to-wall thickness ratio (d₁₀/s_{10/30'}) that is greater than 5.

13. Procedure as claimed in one of the previous claims,
- wherein the metal body is made from a steel; and/or
wherein the wall of the metal sleeve and the metal body are each made from different materials; and/or
wherein the wall of the metal tube and the metal body are each made from different materials; and/or
- wherein the wall of the metal sleeve is made from a material which can be connected via a substance-to-substance connection with a material from which the wall of the metal tube is made.

14. Procedure as claimed in one of the previous claims,
- wherein the section of the metal tube is formed to be circular cylindrical; and/or
- wherein the metal sleeve has an axial length that is less than an axial length which the passage opening has; and/or
- wherein the metal sleeve has an axial length that is less than an axial length which the metal tube has; and/or
- wherein the metal tube has an axial length that is greater than an axial length which the passage opening has; and/or
- wherein a longitudinal groove is formed in the interior surface of the passage opening; and/or
- wherein an annular groove is formed in the interior surface of the passage opening; and/or
- wherein a female thread is formed in the interior surface of the passage opening; and/or
- wherein a male thread is formed in the lateral surface of the metal sleeve.

15. Metal tube-metal sleeve-metal body composite system (10/30/20) of a vibronic-type transducer, which is fabricated using a procedure as claimed in one of the previous claims.

16. Metal tube-metal sleeve-metal body composite system as claimed in the previous claim, wherein the section of the metal tube is adjacent to a section of the metal tube extending outside the interior channel of the sleeve and, consequently outside the passage opening.

17. Vibronic-type sensor, comprising:
a metal tube-metal sleeve-metal body composite system as claimed in one of the Claims 15 to 16, wherein the metal tube is designed to conduct fluid in the interior channel of said tube, particularly fluid that flows at least temporarily.

18. Sensor as claimed in the previous claim, wherein the at least one metal tube is further designed to have fluid flow through it and to vibrate while fluid is flowing through said pipe, particularly in such a way that said metal tube performs mechanical vibrations around an associated static rest position, said vibrations being suitable to induce Coriolis forces in the flowing fluid, said forces depending on a mass flow rate, m, and/or in such a way that said metal tube executes mechanical vibrations around an associated static rest position, said vibrations being suitable to induce friction forces in the flowing fluid, said forces depending on a viscosity, η, of said fluid, and/or in such a way that said metal tube performs mechanical vibrations around an associated static rest position, said vibrations being suitable to induce inertia forces in the flowing fluid, said inertia forces depending on a density, p, of said fluid.

19. Vibronic measuring device, particularly a Coriolis mass flowmeter, a density meter and/or a viscosity meter, designed to measure at least one measured variable, particularly a mass flow rate, a density and/or a viscosity of a flowing fluid, particularly in a connected pipe, particularly a gas, a liquid or a flowable dispersion, said measuring device comprising:
- a sensor, as claimed in one of the Claims 17 to 18, to conduct the fluid;
- and a measuring and electronics system (ME) electrically connected to the sensor.

## Revendications

1. Procédé destiné à la fabrication d'un système composite tube métallique - douille métallique - corps métallique (10/30/20) d'un transducteur du type à vibrations, lequel procédé comprend :
- Mise en place d'une zone partielle d'un tube métallique (10) dans un canal intérieur d'une douille métallique (30), notamment une douille présentant une paroi métallique entourant le canal intérieur, de telle sorte qu'une surface extérieure du tube métallique et une surface intérieure de la douille métallique se touchent au moins partiellement ;
- Fixation de la douille métallique sur la zone partielle du tube métallique placée dans son canal intérieur, en vue de la formation d'un système composite tube métallique - douille métallique (10/30) ;
- Mise en place du système composite tube métallique - douille métallique (10/30) dans l'ouverture de passage d'un corps métallique (20) de telle sorte qu'une surface extérieure de la douille métallique et une surface intérieure de l'ouverture de passage se touchent au moins partiellement ;
et déformation plastique au moins de la douille métallique du système composite tube métallique - douille métallique placé dans l'ouverture de passage, en vue de la formation d'une liaison par friction entre ladite surface intérieure de l'ouverture de passage et ladite surface extérieure de la douille métallique ;
- le tube métallique présentant un rapport calibre / épaisseur de paroi (dio/sio), défini par un rapport entre un calibre (d₁₀) du tube métallique et une épaisseur de paroi (s₁₀) de la paroi dudit tube métallique, qui est supérieur à 20 ; et
- la paroi de la douille métallique présentant une épaisseur initiale (s_{30'}), qui est supérieure à 1 mm et/ou supérieure à l'épaisseur de paroi (s₁₀) de la paroi du tube métallique.

2. Procédé selon l'une des revendications précédentes, pour lequel l'étape de fixation de la douille métallique à la zone partielle du tube métallique placée dans son canal intérieur comprend une étape de formation d'une connexion par liaison de matière, notamment une connexion soudée ou une connexion brasée, entre la douille métallique et le tube métallique.

3. Procédé selon l'une des revendications précédentes, pour lequel l'étape de fixation de la douille métallique à la zone partielle du tube métallique placée dans son canal intérieur comprend une étape de soudage de la douille métallique et du tube métallique.

4. Procédé selon la revendication 1 ou 2, pour lequel l'étape de fixation de la douille métallique à la zone partielle du tube métallique placée dans son canal intérieur comprend une étape de soudage de la douille métallique et du tube métallique.

5. Procédé selon l'une des revendications précédentes,
- comprenant en outre la déformation élastique de la zone partielle du tube métallique placée dans le canal intérieur de la douille métallique en vue de générer une force de déformation suffisante pour obtenir une déformation plastique au moins de la douille métallique ; et/ou
- comprenant en outre : la déformation plastique, notamment le formage à froid, également du corps métallique pour former la liaison par friction.

6. Procédé selon la revendication précédente, comprenant en outre ; la déformation plastique, notamment le formage à froid, également du tube métallique du système composite métallique - douille métallique, en vue de la formation de la liaison par friction.

7. Procédé selon l'une des revendications précédentes,
- pour lequel l'étape de déformation plastique d'au moins la douille métallique comprend une étape de déformation élastique de la zone partielle de tube métallique placée dans le canal intérieur de la douille métallique ; et/ou
- pour lequel l'étape de déformation plastique d'au moins la douille métallique comprend une étape de l'évasement du système composite tube métallique - douille métallique placé dans l'ouverture de passage ; et/ou
- pour lequel l'étape de déformation plastique d'au moins la douille métallique comprend une étape de l'utilisation d'un outil de roulage inséré dans le canal intérieur du tube métallique du système composite tube métallique - douille métallique placé dans l'ouverture de passage en vue de l'évasement dudit système composite tube métallique - douille métallique en direction de la surface intérieure de l'ouverture de passage ; et/ou
- pour lequel l'étape de déformation plastique d'au moins la douille métallique comprend une étape de l'utilisation d'un outil de pressage placé sur une surface extérieure du corps métallique en vue du pressage du corps métallique en direction de la surface extérieure de la douille métallique du système composite tube métallique - douille métallique placé dans l'ouverture de passage.

8. Procédé selon l'une des revendications précédentes,
- comprenant en outre : l'insertion d'un outil de roulage dans le canal intérieur du tube métallique du système composite tube métallique - douille métallique placé dans l'ouverture de passage ; et/ou
- comprenant en outre : la déformation plastique du corps métallique afin de générer une force de déformation suffisante pour obtenir une déformation plastique au moins de la douille métallique ; et/ou
- comprenant en outre : la fixation d'un outil de pressage sur une surface extérieure du corps métallique.

9. Procédé selon l'une des revendications précédentes,
- pour lequel la paroi du tube métallique présente une épaisseur de paroi (s₁₀) , qui est inférieure à 2 mm ; et/ou
- pour lequel le tube métallique présente un calibre (d₁₀), qui est supérieur à 5 mm ; et/ou
- pour lequel le tube métallique présente un rapport calibre / épaisseur de paroi (d10/s10), défini par un rapport entre un calibre (d₁₀) du tube métallique et une épaisseur de paroi (s10) de la paroi dudit tube métallique, qui est supérieur à 24 ; et/ou
- pour lequel la paroi de la douille métallique (30) présente une épaisseur initiale (s30'), qui est supérieure à 2 mm ; et/ou
- pour lequel la douille métallique présente un diamètre extérieur initial (D_{30'}), notamment mesurable avant sa déformation plastique, qui est supérieur d'au moins 4 mm à un calibre (d₁₀) du tube métallique.

10. Procédé selon l'une des revendications précédentes, pour lequel le système composite tube métallique - douille métallique (10/30) présente une épaisseur de paroi totale définie par la somme d'une épaisseur de paroi (s₁₀) de la paroi du tube métallique et d'une épaisseur de paroi initiale (s_{30'}) de la paroi de la douille métallique, qui est supérieure à 2 mm.

11. Procédé selon la revendication précédente, pour lequel le système composite tube métallique - douille métallique (10/30) présente un rapport calibre / épaisseur de paroi (d₁₀/s_{10/30},), défini par un rapport entre le calibre (d₁₀) du tube métallique et l'épaisseur de paroi totale (s_{10/30'}) du système composite tube métallique - douille métallique (10/30), qui est inférieur à 30.

12. Procédé selon la revendication précédente, pour lequel le système composite tube métallique - douille métallique présente un rapport calibre / épaisseur de paroi (d₁₀/s_{10/30'}) supérieur à 5.

13. Procédé selon l'une des revendications précédentes,
- pour lequel le corps métallique est constitué d'un acier ; et/ou
la paroi de la douille métallique et du corps métallique étant chacune constituée de matériaux différents ; et/ou
la paroi du tube métallique et du corps métallique étant chacune constituée de matériaux différents ; et/ou
- pour lequel la paroi de la douille métallique est constituée d'un matériau pouvant être relié par une liaison de matière au matériau dont est constituée la paroi du tube métallique.

14. Procédé selon l'une des revendications précédentes,
- pour lequel la zone partielle du tube métallique est de forme cylindrique circulaire ; et/ou
- pour lequel la douille métallique présente une longueur axiale, qui est inférieure à une longueur axiale que présente l'ouverture de passage ; et/ou
- pour lequel la douille métallique présente une longueur axiale, qui est inférieure à une longueur axiale que présente le tube métallique ; et/ou
- pour lequel le tube métallique présente une longueur axiale, qui est supérieure à une longueur axiale que présente l'ouverture de passage ; et/ou
- pour lequel une rainure longitudinale est formée dans la surface intérieure de l'ouverture de passage ; et/ou
- pour lequel une rainure annulaire est formée dans la surface intérieure de l'ouverture de passage ; et/ou
- pour lequel un filetage intérieur est formé dans la surface intérieure de l'ouverture de passage ; et/ou
- pour lequel un filetage extérieur est formé dans la surface extérieure de la douille métallique.

15. Système composite tube métallique - douille métallique - corps métallique (10/30/20) d'un transducteur du type à vibrations, lequel système est fabriqué au moyen d'un procédé selon l'une des revendications précédentes.

16. Système composite tube métallique - douille métallique - corps métallique selon la revendication précédente, la zone partielle du tube métallique étant adjacente à une zone partielle du tube métallique s'étendant à l'extérieur du canal intérieur de la douille et, par conséquent, à l'extérieur de l'ouverture de passage.

17. Capteur du type à vibrations, comprenant :
un système composite tube métallique - douille métallique - corps métallique selon l'une des revendications 15 à 16, le tube métallique étant conçu pour conduire le fluide dans le canal intérieur dudit tube, notamment au moins temporairement en écoulement.

18. Capteur selon la revendication précédente, pour lequel l'au moins un tube métallique est en outre conçu pour être traversé par le fluide et pour être mis en vibration pendant qu'il est traversé par le fluide, notamment de telle sorte que ledit tube exécute des vibrations mécaniques autour d'une position de repos statique qui lui est associée, lesquelles vibrations sont appropriées pour induire des forces de Coriolis dans le fluide en écoulement, lesquelles forces dépendent d'un débit massique, m, et/ou de telle sorte que ledit tube métallique exécute des vibrations mécaniques autour d'une position de repos statique qui lui est associée, lesquelles vibrations sont appropriées pour induire des forces de frottement dans le fluide en écoulement, lesquelles forces dépendent d'une viscosité, η, dudit fluide, et/ou de telle sorte que ledit tube métallique exécute des vibrations mécaniques autour d'une position de repos statique qui lui est associée, lesquelles vibrations sont appropriées pour induire des forces d'inertie dans le fluide en écoulement, lesquelles forces dépendent d'une densité, p, dudit fluide.

19. Appareil de mesure vibronique, notamment un débitmètre Coriolis, un densimètre et/ou un viscosimètre, destiné à la mesure d'au moins une grandeur, notamment un débit massique, une densité et/ou une viscosité d'un fluide en écoulement, notamment dans une conduite raccordée, notamment un gaz, un liquide ou une dispersion fluide, lequel appareil de mesure comprend :
- pour la conduite du fluide, un capteur selon l'une des revendications 17 à 18 ;
- ainsi qu'une électronique de mesure et d'exploitation (ME) reliée électriquement avec le capteur.
